# EUROPÄISCHE PATENTSCHRIFT

(11) **EP 0 786 614 B1**
(45) Veröffentlichungstag und Bekanntmachung des Hinweises auf die Patenterteilung: **02.04.2003**
(21) Anmeldenummer: 97100998.0
(22) Anmeldetag: 23.01.1997
(51) Int. Cl.: F16K 31/60

(54) **Sanitärarmatur**
Sanitary valve
Vanne sanitaire

(30) Priorität: 23.01.1996 DE 19602161
(43) Veröffentlichungstag der Anmeldung: 30.07.1997
(73) Patentinhaber: Hansgrohe AG, 77761 Schiltach (DE)
(72) Erfinder: Blattner, Joachim, 77716 Haslach (DE); Ginter, Gerhard, 78144 Tennenbronn (DE); Heinzelmann, Werner, 72275 Alpirsbach (DE)
(74) Vertreter: Patentanwälte Ruff, Wilhelm, Beier, Dauster & Partner

(56) Entgegenhaltungen:
- EP-A- 0 092 863
- EP-A- 0 579 111
- DE-A- 4 343 572
- DE-U- 9 017 658

## Beschreibung

Die Erfindung geht aus von einer Sanitärarmatur mit einem Armaturenkörper, in dem eine Ventilkartusche angeordnet ist. Die Ventilkartusche enthält einen Steuerhebel, dessen Betätigung das Ventil steuert. Es kann sich dabei um ein Eingriffmischventil handeln, bei dem beispielsweise ein Verschwenken des Steuerhebels zur Veränderung der Menge des ausströmenden Wassers und ein Verdrehen des Steuerhebels um seine eigene Achse zur Änderung der Temperatur dient.

Bislang ist es bekannt, einen Betätigungsgriff mit dem Steuerhebel derart zu verbinden, daß der Griff auf den Steuerhebel aufgesteckt wird und eine im Griff vorhandene Klemmschraube festgeschraubt wird. Diese greift dann radial an dem Steuerhebel an. Diese Art der Befestigung führt dazu, daß im Dauerbetrieb die Stelle des Steuerhebels, an der die Klemmschraube angreift, abgenutzt wird, so daß sich die Befestigung lockert.

Ebenfalls bekannt ist ein Eingriffmischventil (DE 42 23 093 A1), bei dem an dem Stellhebel ein Flanschelement befestigbar ist, das mit dem Betätigungsgriff durch eine Klemmschraube verkeilbar ist.

Weiterhin bekannt ist eine Griffanordnung für ein Mischventil (EP-A1-092863), bei dem ein Zwischenelement an dem Steuerschaft des Ventils angeschraubt wird. Über das Zwischenelement wird eine Schraube aufgesetzt, die ein Loch aufweist. Durch das Loch wird eine Schraube zur Befestigung des Griffs an dem Zwischenelement und an der Haube eingeschraubt.

Weiterhin ist es bekannt (DE-U1-9017 658), auf das Ende eines Steuerhebels einen Griff, der aus Kunststoff besteht, aufzuschnappen.

Der Erfindung liegt die Aufgabe zugrunde, eine sichere und dauerhafte Befestigungsmöglichkeit zur Anbringung des Betätigungsgriffs an eine Armatur zu schaffen.

Zur Lösung dieser Aufgabe schlägt die Erfindung eine Sanitärarmatur mit den im Anspruch 1 genannten Merkmalen vor. Weiterbildungen der Erfindung sind Gegenstand von Unteransprüchen.

Die Klemmschraube greift nun nicht mehr direkt an dem Steuerhebel an, sondern an dem Verbindungselement, das zu diesem Zweck speziell ausgebildet sein kann. Die Verbindung zwischen dem Verbindungselement und dem Steuerhebel ist aufgrund des flächigen Anlegens sehr stabil und lockert sich nicht.

Insbesondere kann vorgesehen sein, daß das Verbindungselement an dem Steuerhebel an mindestens zwei einander gegenüberliegenden Seiten flächig anliegt.

Insbesondere kann vorgesehen sein, daß das Verbindungselement den Steuerhebel hülsenartig umgibt, so daß ein Anliegen längs einer geschlossenen Ringfläche gegeben ist. Es kann sich dabei um eine kreisförmige oder auch um eine von der Kreisform abweichende, insbesondere quadratische Hülsenform handeln.

Zur Befestigung des Griffs an dem Verbindungselement kann vorgesehen sein, daß das Verbindungselement in die Ausnehmung im Griff eingeschnappt ist. Je nach den verwendeten Materialien und Abmessungen kann das Aufschnappen so gestaltet sein, daß es nur schwergängig lösbar ist.

Es ist jedoch ebenfalls möglich, daß die Verschnappung mit Hilfe eines verbiegbaren oder verstellbaren Elementes geschieht, das nachträglich, beispielsweise mit Hilfe eines Werkzeuges, ein Entriegeln möglich macht.

Ebenfalls möglich ist es, daß der Betätigungsgriff an dem Verbindungselement durch eine Klemmschraube festgelegt ist. Die Klemmschraube, die in einem Gewinde des Betätigungsgriffs geführt ist, greift nun nicht mehr an dem Steuerhebel selbst, sondern an dem Verbindungselement an.

Das Verbindungselement kann insbesondere einen Ansatz aufweisen, an dem die Klemmschraube angreift.

Dabei kann vorgesehen sein, daß der Ansatz zwischen einem Teil des Steuerhebels und der Klemmschraube oder auch zwischen einem Teil des Betätigungsgriffs und der Klemmschraube festgelegt ist.

Erfindungsgemäß kann in Weiterbildung vorgesehen sein, daß die Längsachse der Klemmschraube schräg gegenüber der Längsachse des Steuerhebels verläuft. Dies ergibt günstige Kraftverhältnisse und verringert die Gefahr des Lockerwerdens.

Erfindungsgemäß kann vorgesehen sein, daß das Verbindungselement aus Metall besteht, während beispielsweise der Steuerhebel aus Kunststoff bestehen kann.

Zur besonders sicheren Festlegung des Verbindungselementes kann dieses in Vertiefungen des Steuerhebels eingreifen.

Das Verbindungselement kann bis zu der Schwenkachse des Steuerhebels reichen, so daß ggf. die Lagerung für den Hebel auch an dem Verbindungselement angreift.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine teilweise geschnittene Seitenansicht einer Sanitärarmatur nach der Erfindung;
- Fig. 2: eine Ansicht des Verbindungselementes von rechts in Fig. 1;
- Fig. 3: einen Querschnitt durch das Verbindungselement der Fig. 2;
- Fig. 4: eine Ansicht des Verbindungselementes der Fig. 2 und 3 von unten;
- Fig. 5: einen Schnitt durch eine zweite Befestigungsmöglichkeit;
- Fig. 6: eine teilweise geschnittene Seitenansicht einer Sanitärarmatur nach der Erfindung;
- Fig. 7: eine Ansicht des Verbindungselementes von rechts in Fig. 6;
- Fig. 8: eine Ansicht des Verbindungselementes der Fig. 7 von oben;
- Fig. 9: eine Ansicht des Verbindungselementes der Fig. 7 von links in Fig. 7;
- Fig. 10: einen Schnitt durch eine weitere Befestigungsmöglichkeit;
- Fig. 11: einen der Fig. 10 entsprechenden Schnitt bei einer nochmals weiteren Befestigungsmöglichkeit;
- Fig. 12: eine nochmals weitere Befestigungsart.

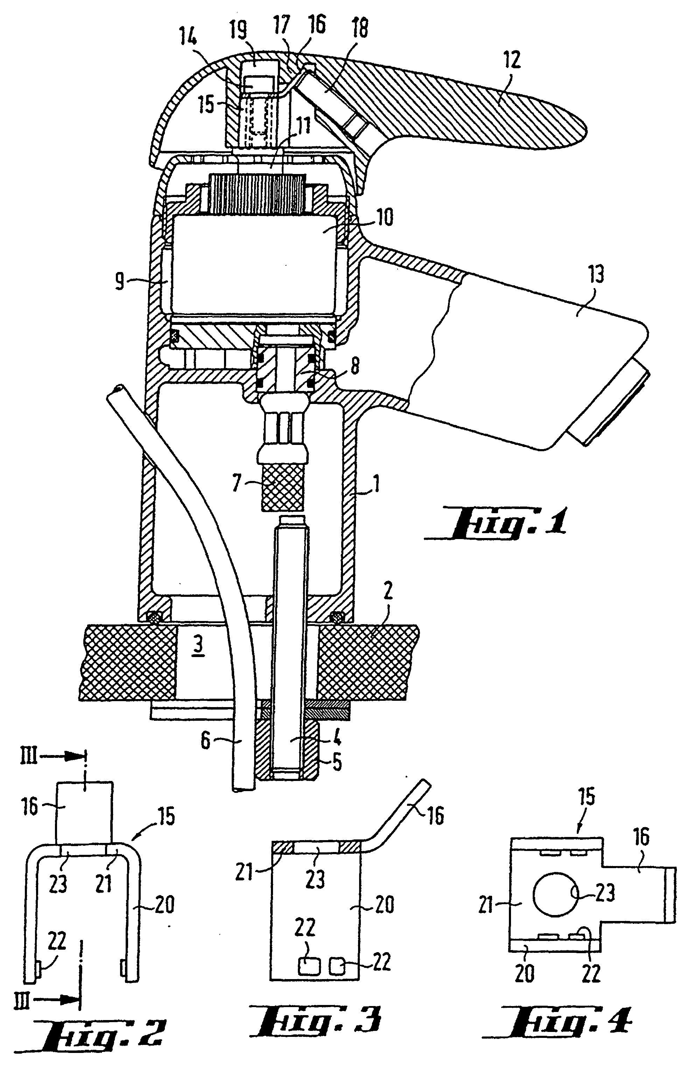

In Fig. 1 ist eine Sanitärarmatur dargestellt, die ein Armaturengehäuse 1 aufweist. Das Armaturengehäuse 1 ist an der Oberseite einer Platte 2 im Bereich eines durchgehenden Loches 3 angebracht. Das Armaturengehäuse 1 ist auf die Oberseite der Platte 2 aufgesetzt und von der Unterseite her mit Hilfe eines Gewindestiftes 4 und einer auf den Gewindestift 4 aufgeschraubten Mutter 5 festgeschraubt. Durch das Loch 3 sind zusätzlich zu einem Bowdenzug 6 zwei Schläuche 7 hindurchgeführt, einer für kaltes Wasser und einer für warmes Wasser. Die beiden Schläuche sind mit Hilfe von Nippeln 8 in das Armaturengehäuse 1 eingesetzt. Sie führen in einen Aufnahmeraum 9, in dem im dargestellten Beispiel eine Ventilkartusche 10 angeordnet ist. Die Ventilkartusche enthält einen Steuerhebel 11, der nach oben aus dem Armaturengehäuse 1 herausragt und dort mit einem Betätigungsgriff 12 verbunden ist. Mit Hilfe des Steuerhebels 1 wird je nach dessen Stellung das Mischungsverhältnis zwischen warmem und kaltem Wasser sowie die Menge des Mischwassers bestimmt. Dieses Mischwasser tritt aus dem Armaturauslauf 13 aus.

An dem Steuerhebel 11, der Teil der Ventilkartusche 10 ist, ist mit Hilfe einer Schraube 14 ein Verbindungselement 15 angeschraubt. Das Verbindungselement 15, das im einzelnen noch dargestellt werden wird, liegt an zwei gegenüberliegenden Seiten an der Außenseite des Steuerhebels 11 an und wird von dem Kopf der Schraube 14 gegen die freie Stirnfläche des Steuerhebels 11 angeschraubt. Das Verbindungselement 15 weist einen seitlichen abgebogenen Ansatz 16 auf, der unter einem Winkel von etwa 45° gegenüber der Längsachse des Steuerhebels 11 verläuft. Dieser Ansatz 16 liegt auf einer im Innern des Betätigungsgriffs 12 ausgesparten Schulter 17 auf.

In dem Betätigungsgriff 12 ist mit Hilfe eines Gewindes in einem Durchgang eine Madenschraube 18 geführt, deren nach innen gerichtetes freies Ende auf der der Schulter 17 gegenüberliegenden Seite des Ansatzes 16 des Verbindungselementes 15 flächig anliegt. Durch Festschrauben der Madenschraube 18 wird der Ansatz 16 gegen diese Schulter 17 verklemmt und dadurch der Betätigungsgriff 12 an dem Verbindungselement 15 festgelegt. Eine Bewegung des Betätigungsriffs 12 führt daher zu einer Verschwenkung bzw. Verdrehung des Steuerhebels 11 und damit zu einer Betätigung der Ventilkartusche 10.

Der Betätigungsgriff 12 ist so gestaltet, daß das Verbindungselement an mindestens drei Seiten an den Flächen einer Ausnehmung 19 im Betätigungsgriff anliegt. Mit anderen Worten läßt sich der Betätigungsgriff 12 zunächst auf das Verbindungselement 15 aufschieben, bis er in die dargestellte Endposition gelangt. In dieser Endposition erfolgt die Verklemmung durch Festziehen der Madenschraube 18.

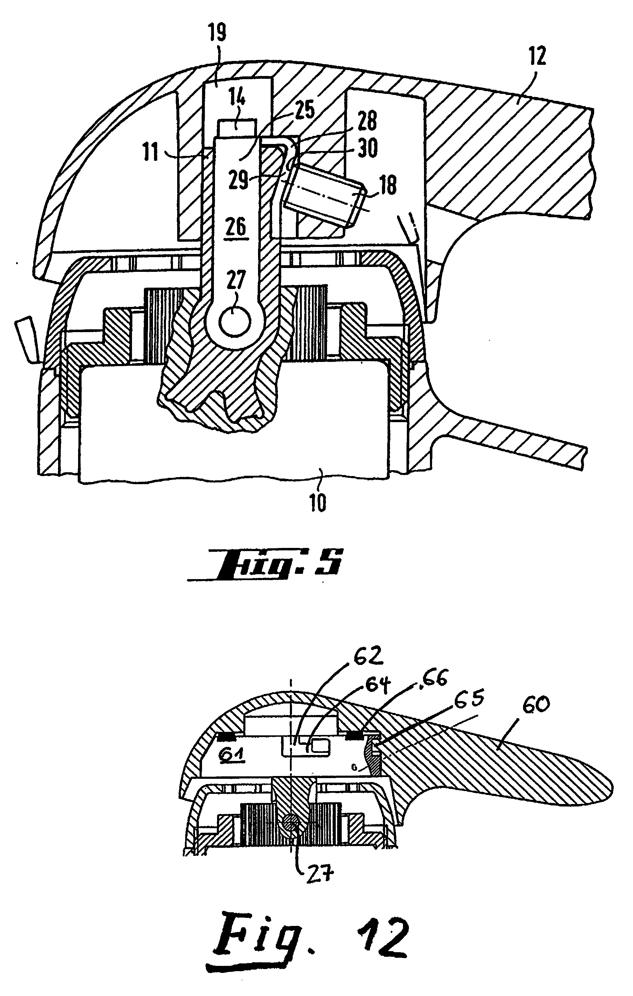

Fig. 2 zeigt in einem gegenüber der Fig. 1 vergrößerten Maßstab eine Ansicht des Verbindungselementes 15 von rechts in Fig. 1. Das Verbindungselement 15 ist aus einem Metallstück einstückig durch Stanzen und Biegen hergestellt. Es weist die in Fig. 2 zu sehende U-Form auf, wobei die beiden Schenkel 20 parallel zueinander verlaufen und durch den Steg 21 miteinander verbunden sind. An der Innenseite der beiden Schenkel 20 sind im Bereich des Endes des Verbindungselementes je zwei nach innen gerichtete Ansätze 22 angeformt, die zur auch formschlüssigen Verbindung mit dem Steuerhebel 11 dienen.

In dem Steg 21 ist ein zentrales Loch 23 gebildet, durch das die Schraube 14 hindurchgreift.

Fig. 3 zeigt einen Schnitt senkrecht zur Papierebene durch die Fig. 2. Es ist hier zu sehen, daß der Ansatz 16 schräg gegenüber der Längsachse des Steuerhebels verläuft, etwa unter einem Winkel von 45°.

Fig. 4 zeigt eine Ansicht des Verbindungselementes 15 von unten in Fig. 2 und 3. Auch hier sind die Ansätze 22 auf der Innenseite der Schenkel 20 zu sehen.

Das in den Figuren 2 bis 4 dargestellte Verbindungselement wird von dem freien Ende her auf den Steuerhebel 11 der Ventilkartusche 10 aufgeschoben, bis die Ansätze 22 in den entsprechenden Vertiefungen zu liegen kommen. Anschließend wird die Schraube 14 durch das Loch 23 in ein Innengewinde im Steuerhebel 11 eingeschraubt. Die Innenseite des Steges 21 liegt in diesem Zustand auf der freien Stirnfläche des Steuerhebels 11 auf.

Fig. 5 zeigt eine der Fig. 1 entsprechende Darstellung bei einer zweiten Ausführungsform. Das Verbindungselement 25, das in ähnlicher Weise an dem Steuerhebel 11 der Ventilkartusche 10 angeschraubt ist, weist wiederum zwei Schenkel 26 auf, die sich bis zu der Schwenkachse 27 des Steuerhebels 11 erstrecken und dort ebenfalls eine Öffnung aufweisen. Dadurch wird an der Schwenkachse des Steuerhebels 11 nicht nur dieser selbst, sondern auch das Verbindungselement 25 gelagert.

Die Schenkel 26 weisen eine Breite auf, die kleiner ist als die Breite des in gleicher Richtung gemessenen Steuerhebels 11, so daß die Schenkel 26 in Vertiefungen der Seiten des Steuerhebels 11 zu liegen kommen können. Dadurch ist zusätzlich zu der Lagerung an der Schwenkachse eine formschlüssige Verbindung zwischen dem Verbindungselement 25 und dem Steuerhebel 11 gegeben. Die Befestigung geschieht wiederum mit Hilfe der Befestigungsschraube 14, die in eine in Axialrichtung des Steuerhebels 11 verlaufende Gewindebohrung eingeschraubt ist. Aufgrund der formschlüssigen Verbindung kann die Befestigungsschraube auch entfallen.

Das Verbindungselement 25 weist einen seitlichen Ansatz 28 auf, der ebenfalls von dem Steg des Verbindungselementes 25 ausgeht, aber in Richtung auf den Steuerhebel 11 abgebogen verläuft. Dadurch wird eine ebenfalls unter einem Winkel gegenüber der Längsachse des Steuerhebels 11 verlaufende Ansatzfläche 29 gebildet, die auf ihrer Innenseite direkt an einer entsprechenden Schulter 30 des Steuerhebels 11 anliegt. Auf der gegenüberliegenden Seite greift das Ende der Madenschraube 18 an der Fläche 29 des Ansatzes 28 an. Dadurch wird der Ansatz 28 zwischen dem Steuerhebel 11 und der Madenschraube 18 des Betätigungsgriffs 12 verklemmt.

Wiederum weist der Betätigungsgriff 12 eine Ausnehmung 19 auf, deren Innenform der Außenform des Steuerhebels 11 entspricht. Die Anbringung des Betätigungsgriffs 12 an dem Verbindungselement 25 geschieht in der gleichen Weise wie bei der Ausführungsform nach Fig. 1, d.h. es erfolgt ein Aufschieben vom freien Ende bis in die dargestellte Position, wonach die Klemmschraube 18 dann festgeschraubt wird.

Bei der Ausführungsform nach Fig. 5 ist es möglich, den Steuerhebel 11 zusammen mit dem Verbindungselement 25 durch Umspritzen des Verbindungselementes 25 herzustellen.

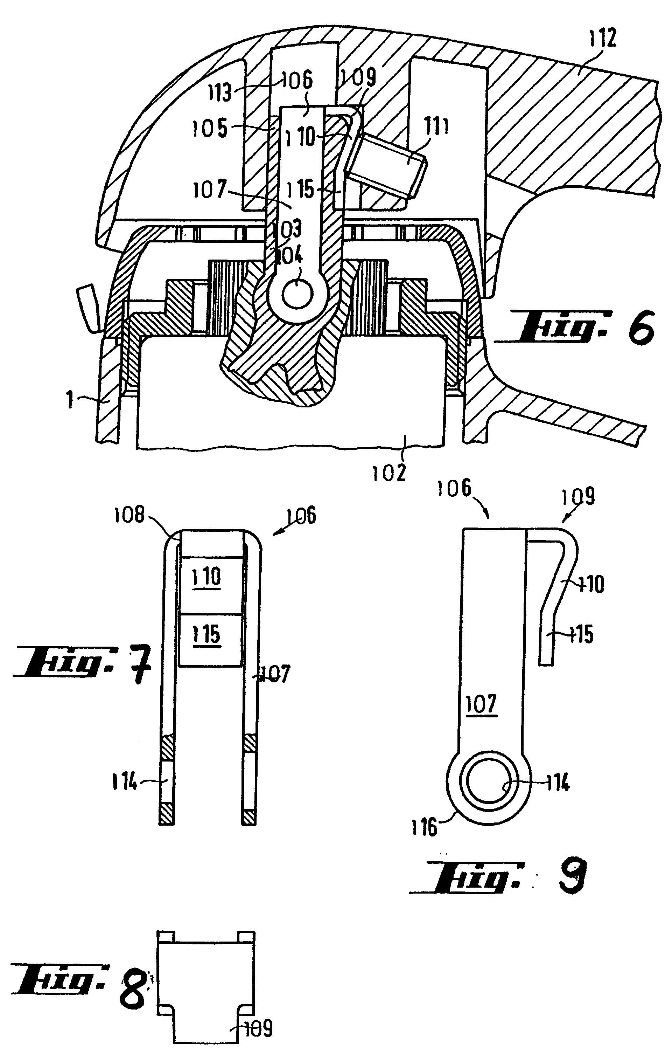

Fig. 6 zeigt stark schematisch das obere Teil einer Sanitärarmatur bei der in einem Armaturenkörper 1 eine Mischerkartusche 102 angeordnet ist. Die Mischerkartusche wird mit Hilfe eines Steuerhebels 103 betätigt, der im dargestellten Beispiel an der Oberseite aus dem Armaturenkörper 1 herausragt. Der Steuerhebel 103 kann um die Achse einer Welle 104 verschwenkt werden. Gleichzeitig kann mit seiner Hilfe durch ein Verdrehen um die Achse der Ventilkartusche 102 eine zweite Steuerungsbewegung durchgeführt werden.

Auf das freie Ende 105 ist ein Verbindungselement 106 aufgeschnappt, das etwa U-förmig ausgebildet ist und zwei Schenkel 107 aufweist, die bis zu der Welle 104 reichen und dort mit Öffnungen versehen sind.

Im Bereich des die beiden Schenkel 107 miteinander verbindenden Steges 108 ist seitlich an dem Verbindungselement 106 ein lappenartiger Ansatz 109 ausgebildet, der nach unten, d.h. in Richtung auf die Welle 104, abgebogen ist und dort eine ebene Anlagefläche 110 für eine Befestigungsschraube 111 bildet. Die Anlagefläche 110 verläuft schräg gegenüber der Außenseite des Steuerhebels 103 und zwar so, daß sich die Anlagefläche 110, ausgehend von dem freien Ende des Steuerhebels 103, in Richtung auf die Welle 104 der Längsachse des Steuerhebels 103 annähert.

Die Befestigungsschraube 111 ist in einer schrägverlaufenden Gewindebohrung eines Betätigungsgriffs 112 eingeschraubt und greift mit ihrem freien ebenen Ende flächig an der Anlagefläche 110 an. Dadurch wird der Betätigungsgriff an dem Verbindungselement und damit an dem Steuerhebel 103 festgeschraubt.

Der Betätigungsgriff 112 weist an seiner dem Steuerhebel 103 zugewandten Innen- bzw. Unterseite eine Aufnahme 113 auf, die im Querschnitt an die Querschnittsform des Steuerhebels 103 angepaßt ist, so daß bei einer Verdrehung um die Achse der Ventilkartusche 102 die Mitnahme des Steuerhebels 103 formschlüssig erfolgt. Die Befestigungsschraube 111 ist in erster Linie eine Schraube zur Verhinderung des Abziehens bzw. zur Beseitigung von Spiel.

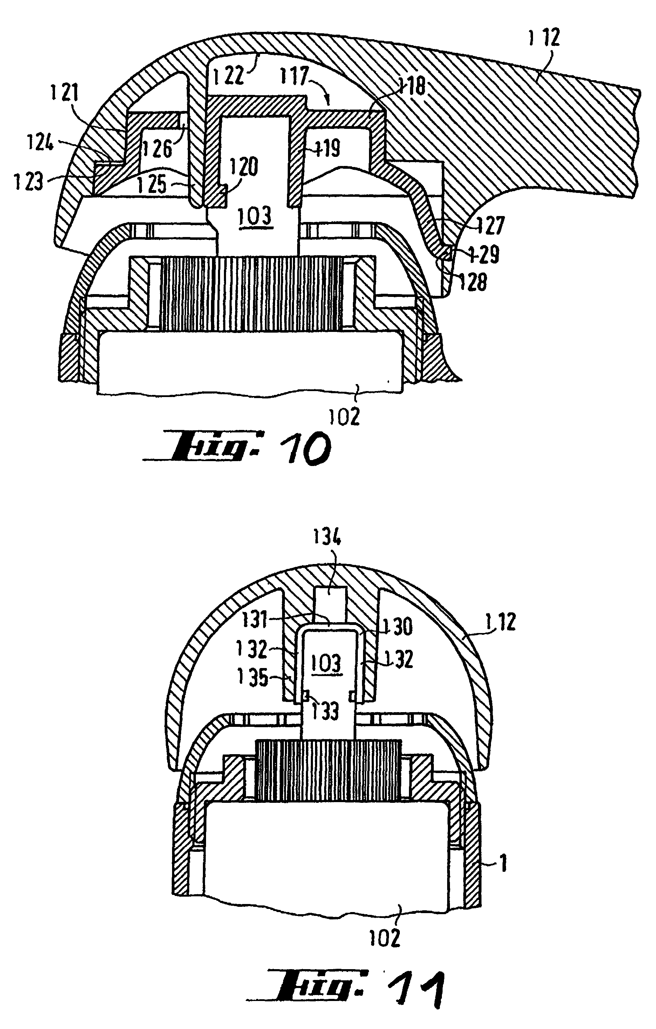

Fig. 7 zeigt in leicht vergrößertem Maßstab eine Ansicht des Verbindungselementes 106 der Fig. 6 von rechts. Die beiden Schenkel 107 verlaufen parallel zueinander und bilden dadurch einen Raum, in dem der Steuerhebel 103 zu liegen kommt. Die Schenkel 107 besitzen jeweils in ihrem freien Endbereich eine Öffnung 114 für die der Schwenklagerung des Steuerhebels 103 dienende Welle 104.

Von dem Steg 108 erstreckt sich, in der Zeichnungsebene der Fig. 7 nach vorne, über eine Biegung die Anlagefläche 110, die schräg verläuft, sowie der Endabschnitt 115, der parallel zur Längsachse des Steuerhebels 103 verläuft und an der Außenseite des Steuerhebels 103 anliegt, siehe auch Fig. 6. Der abgebogene und umgebogene Ansatz 109 liegt daher vollflächig an dem Material des Steuerhebels 103 an, so daß beim Festdrehen der Befestigungsschraube 111 der Ansatz 109 nicht ausweichen kann.

Diese Form des Ansatzes 109 ist ebenfalls in Fig. 9 zu sehen, die eine vergrößerte Darstellung des Verbindungselementes aus der gleichen Richtung wie in Fig. 6 darstellt. Im Bereich der Öffnungen 114 sind die Schenkel 107 etwas verbreitert, so daß eine zu der Öffnung 114 koaxiale Außenkontur 116 entsteht.

Bei der Ausführungsform nach Fig. 10 ist ein Verbindungselement 117 vorgesehen, das etwa hutförmig ausgebildet ist. Es weist eine flache Scheibe 118 auf, in deren Mitte auf der der Ventilkartusche 102 zugewandten Unterseite ein zylindrischer Ansatz 119 angeformt ist. Der zylindrische Ansatz 119 entspricht in seinem Querschnitt etwa dem Querschnitt des freien Endes 105 des Steuerhebels. An einer Seite ist an dem zylindrischen Ansatz 119 nach innen im Bereich von dessen offenem Ende eine widerhakenartige Profilierung 120 angeformt, die in eine entsprechende Vertiefung des Steuerhebels 103 einschnappt.

An dem Außenumfang der Scheibe 118 ist eine Schürze 121 angeformt, die kreisförmig oder auch abweichend von der Kreisform sein kann. Diese Schürze 121 liegt mit ihrer Außenseite an der Innenseite der Aufnahme 122 im Betätigungsgriff 112 an.

Die Schürze 121 setzt sich an ihrer Unterseite in eine radial nach außen gerichtete Schulter 123 fort, die ebenfalls an einer entsprechenden Anlagefläche 124 des Griffes 112 anliegt. Auf diese Weise wird eine form- und kraftschlüssige Verbindung zwischen dem Betätigungsgriff 112 und dem Verbindungselement 117 geschaffen.

An der Innenseite der Aufnahme 122 ist ein Finger 125 angeformt, der durch eine Öffnung 126 in der Scheibe 118 des Verbindungselementes 117 hindurchgreift und an der Außenseite des zylindrischen Ansatzes 119 an der Stelle anliegt, wo an der Innenseite die widerhakenartige Profilierung 120 angeformt ist. Dadurch wird ein auch unbeabsichtigtes Lösen des Verbindungselementes durch Ausrasten verhindert.

An der Außenseite der Schürze 118 ist in Fig. 10 rechts ein federnder Ansatz 127 angeformt, der mit seinem freien Ende 128 in eine entsprechende Öffnung 129 des Betätigungsgriffs rastend eingreift. Diese Rastung kann wieder dadurch gelöst werden, daß mit einem in die Öffnung 129 eingeführten Werkzeug, beispielsweise einem Stift, das freie Ende 128 nach innen herausgeschoben wird.

Die Anbringung des Betätigungsgriffs 112 bei der Ausführungsform nach Fig. 10 geschieht in zwei Stufen. Zunächst wird das Verbindungselement 117 vom freien Ende 105 des Steuerhebels 103 auf diesen aufgeschoben, wobei die widerhakenartige Profilierung 120 so orientiert ist, daß sie der entsprechenden Kerbe des Steuerhebels 103 entspricht. Beim Aufschieben federt die widerhakenartige Profilierung 120 leicht nach außen und gleitet über die Seitenwand des Steuerhebels 103, bis sie schließlich in die Kerbe einschnappt. Damit ist die Verbindung zwischen dem Verbindungselement 117 und dem Steuerhebel 103 gegeben. Anschließend wird, wiederum von der Oberseite her, der Betätigungsgriff 112 auf die Außenseite des Verbindungselementes 117 aufgedrückt, wobei der Finger 125 durch die Öffnung 126 hindurchgreift und das Lösen des Verbindungselementes 117 von dem Steuerhebel 103 verhindert. Gleichzeitig gelangt das freie Ende 128 des federnden Rastansatzes 127 in die Öffnung 129 zu liegen, wodurch nun auch ein Abziehen des Betätigungsgriffes 112 von dem Verbindungselement 117 verhindert wird. Der Betätigungsgriff 112 ist damit form- und kraftschlüssig an dem Verbindungselement 117 festgelegt, das seinerseits form- und kraftschlüssig an dem Steuerhebel 103 festgelegt ist.

Fig. 11 zeigt eine der Fig. 10 ähnliche Ausführungsform, bei der ein Verbindungselement 130 ähnlich dem Verbindungselement 106 der Fig. 6 verwendet wird. Das Verbindungselement 130 ist wiederum U-förmig ausgebildet und enthält einen Steg 131, der zwei parallele Schenkel 132 miteinander verbindet. An der Innenseite der Schenkel 132 ist im Bereich von deren freiem Ende jeweils ein Ansatz 133 ausgebildet, der in eine entsprechende Kerbe des Steuerhebels 103 eingreift. Das Aufschieben des Verbindungselementes 130 geschieht wiederum von dem freien Ende des Steuerhebels 103 her. Sobald das Verbindungselement 130 die dargestellte Position eingenommen hat, wird auf das Verbindungselement der Betätigungsgriff 112 aufgeschoben, der an seiner Innenseite wiederum eine Aufnahme 134 aufweist. Die Aufnahme 134 ist an die Querschnittsform des Verbindungselementes 130 angepaßt. Die Aufschiebbewegung ist dadurch begrenzt, daß zwei Schultern an dem Steg 131 des Verbindungselementes 130 anliegen. In der dargestellten Endposition reichen die Wände 135 der Aufnahme 134 bis fast zu dem an der Innenseite mit den Ansätzen 133 versehenen Ende des Verbindungselementes 130. Sie liegen an der Außenseite des Verbindungselementes 130 unter Spannung an und verhindern auf diese Weise ein Lösen des Verbindungselementes 130 von dem Steuerhebel 103.

Bei der Ausführungsform nach Fig. 11 liegt das Verbindungselement an zwei gegenüberliegenden Seitenflächen des Steuerhebels an. Es ist auch möglich, daß das Verbindungselement an drei oder auch an vier Seitenflächen des im Querschnitt viereckigen Endes des Steuerhebels anliegt. Bei einer anderen Querschnittsform bedeutet dies, daß das Verbindungselement an mindestens zwei, maximal aber auch an allen Seitenflächen des Endes des Steuerhebels anliegen kann. Dabei können die inneren Vorsprünge an mindestens zwei, maximal wiederum allen Anlageflächen des Verbindungselementes vorgesehen sein und in entsprechende Ausnehmungen des Steuerhebels eingreifen. Bei einem viereckigen Querschnitt beispielsweise können an allen vier Seiten Vorsprünge und Ausnehmungen vorhanden sein. Die Vorsprünge können als einzelne, voneinander getrennte Vorsprünge sein, so daß beispielsweise an jeder Fläche zwei einzelne Vorsprünge vorhanden sind. Die Vorsprünge können aber auch als in Umfangsrichtung beispielsweise um eine Ecke herum greifende Rippen ausgebildet sein, also zusammenhängend.

Bei einem Angreifen des Verbindungselementes an drei Seiten in Art einer seitlich offenen Hülse, können die Seitenwände des Verbindungselementes im Bereich der Seiten miteinander verbunden sein. Ebenfalls möglich ist es, daß bei einem Anliegen des Verbindungselementes an allen vier Seiten die Seitenwände des Verbindungselementes paarweise miteinander verbunden sind, so daß zwei Schlitze gebildet werden, die das Aufschnappen erleichtern.

Was in den Fig. 10 und 11 für das Eingreifen von Vorsprüngen des Verbindungselementes in Ausnehmungen des Steuerhebels gesagt wurde, gilt ggf. auch umgekehrt, so daß Vorsprünge an dem Ende des Steuerhebels in Ausnehmungen bzw. Vertiefungen des Verbindungselementes eingreifen können. Bevorzugt wird allerdings die Lösung, bei der die Vorsprünge an dem Verbindungselement angeordnet sind.

In allen Fällen, in denen die Verbindung des Verbindungselementes mit dem Steuerhebel durch ein Einschnappen erfolgt, kann die Sicherung dadurch geschehen, daß die Aufnahme im Handgriff flächig an den Außenseiten des Verbindungselementes anliegt und dadurch das Herausrücken der Vorsprünge aus den Vertiefungen verhindert.

Im Fall des Anliegens des Verbindungselementes an allen Seiten des Steuerhebels, kann das Verbindungselement als Hülse ausgebildet sein, wobei auch in diesem Fall aufgrund einer gewissen Nachgiebigkeit des Materials ein Angreifen von Vorsprüngen in Vertiefungen vorgesehen sein kann.

Fig. 12 zeigt eine nochmals weitere Möglichkeit, einen Griff 60 an einem Steuerhebel anzubringen. Das Verbindungselement 61 weist im dargestellten Beispiel die Form einer flachen Scheibe oder eines flachen Ringelements auf, das im Bereich seiner Mantelfläche Einschnitte 62 enthält. Die Einschnitte gehen von der freien Randkante des Verbindungselements 61 aus und verlaufen zunächst axial, gehen dann aber in einen Abschnitt 64 über, in dem sie etwa längs des Umfangs verlaufen. Im Endbereich der Abschnitte 64 kann ein kleiner Hinterschnitt gebildet sein.

Die Innenöffnung des Griffes 60 enthält einzelne Vorsprünge 65, die zum Eingriff in die Einschnitte 62 ausgebildet sind.

Die Zahl, Größe und Anordnung dieser Vorsprünge 65 entspricht der Zahl, Größe und Anordnung der Einschnitte 62. Auf diese Weise wird ein Bajonettverschluß zwischen dem Verbindungselement 61 und dem Griff 60 gebildet. Damit in der Verriegelungsstellung des Bajonettverschlusses, in der die Vorsprünge 65 am geschlossenen Ende der Abschnitte 64 der Einschübe 62 liegen, eine Festlegung dieser Stellung vorhanden ist, sind an der Innenseite der Griffausnehmung axial wirkende Druckfedern 66 vorhanden. Diese Druckfedern drücken gegen die Oberseite des Verbindungselements und bewirken dadurch eine Festlegung des Bajonettverschlusses.

## Patentansprüche

1. Sanitärarmatur mit
1.1 einem Armaturenkörper (1),
1.2 einer in dem Armaturenkörper (1) angeordneten Ventilkartusche (10), die
1.2.1 mit Hilfe eines Steuerhebels (11) betätigbar ist,
1.3 einem Verbindungselement (15, 25, 35, 45), das
1.3.1 an dem freien Ende des Steuerhebels (11) über mindestens einen Teil von dessen Länge flächig anliegt und
1.3.2 an diesem festgelegt ist, sowie mit
1.4 einem Betätigungsgriff (12), der
1.4.1 an dem Verbindungselement (15, 25, 35, 45) angreift und
1.4.2 mit diesem in Drehrichtung um die Achse des Steuerhebels (11) formschlüssig verbunden ist, **dadurch gekennzeichnet, dass**
1.5 das Verbindungselement auf das freie Ende des Steuerhebels (11) aufgeschnappt ist,
1.6 der Betätigungsgriff (12) mit dem Verbindungselement (35, 45) nach dessen Aufschnappen auf das freie Ende des Steuerhebels (11) verbunden ist und
1.7 eine Sicherung der Verbindung des auf den Steuerhebel aufgeschnappten Verbindungselements mit diesem durch eine Aufnahme im Betätigungsgriff (12) erfolgt, die flächig an den Außenseiten des Verbindungselements anliegt und dadurch das Lösen der Schnappverbindung verhindert.

2. Sanitärarmatur nach Anspruch 1, bei der der Betätigungsgriff (12) auf das Verbindungselement (35, 45) aufgeschnappt ist.

3. Sanitärarmatur nach Anspruch 1 oder 2, bei der das Verbindungselement (15, 25, 35, 45) mit Hilfe eines in Längsrichtung des Steuerhebels (11) wirkenden Befestigungselement (14) an diesem festgelegt ist.

4. Sanitärarmatur nach Anspruch 2 oder 3, bei der das Verbindungselement (15, 25, 35, 45) an dem Steuerhebel (11) zusätzlich festgeschraubt ist.

5. Sanitärarmatur nach einem der vorhergehenden Ansprüche, bei der das Verbindungselement (15, 25, 35, 45) den Steuerhebel (11) hülsenartig umgibt.

6. Sanitärarmatur nach einem der Ansprüche 1 oder 3 bis 5, bei der der Betätigungsgriff (12) an dem Verbindungselement (15) durch eine Klemmschraube festgelegt ist, die vorzugsweise an einem Ansatz (16, 28) des Verbindungselements (15) angreift.

7. Sanitärarmatur nach Anspruch 6, bei der der Ansatz (28) zwischen einem Teil des Steuerhebels (11) und der Klemmschraube (18) festgelegt ist.

8. Sanitärarmatur nach Anspruch 6, bei der der Ansatz (16) zwischen einem Teil des Betätigungsgriffs (12) und der Klemmschraube (18) festgelegt ist.

9. Sanitärarmatur nach einem der Ansprüche 6 bis 8, bei der die Längsachse der Klemmschraube (18) schräg gegenüber der Längsachse des Steuerhebels (11) verläuft.

10. Sanitärarmatur nach einem der vorhergehenden Ansprüche, bei der das Verbindungselement (15, 25, 35, 45) aus Metall besteht.

11. Sanitärarmatur nach einem der vorhergehenden Ansprüche, bei der das Verbindungselement (15, 25, 35, 45) in Vertiefungen des Stellhebels (11) eingreift.

12. Sanitärarmatur nach einem der vorhergehenden Ansprüche, bei der das Verbindungselement (25) bis zu der Schwenkachse (27) des Stellhebels (11) reicht und an dieser mit festgelegt ist.

13. Sanitärarmatur nach einem der Ansprüche 1 bis 9 und 11 bis 12, bei der das Verbindungselement aus Kunststoff oder aus einer Kombination von Kunststoff und Metall besteht.

14. Sanitärarmatur nach einem der vorhergehenden Ansprüche, bei der das Verbindungselement (61) mit Hilfe von Bajonetthaken an dem Griff (60) festgelegt ist.

15. Sanitärarmatur nach Anspruch 14, bei der die Bajonetthaken an dem Griff (60) angeordnet sind und mit Einschnitten (62) an einem das Verbindungselement (61) bildenden Zwischenstück zusammenwirken.

## Claims

1. Sanitary fitting with
1.1 a fitting body (1),
1.2 a valve cartridge (10) located in the fitting body (1) and which
1.2.1 is operable with the aid of a control lever (11),
1.3 a connecting element (15, 25, 35, 45), which
1.3.1 over at least part of its length engages in areal manner on the free end of the control lever (11) and
1.3.2 is fixed on the same, as well as with
1.4 an operating grip (12), which
1.4.1 engages on the connecting element (15, 25, 35, 45) and
1.4.2 is positively connected thereto in the rotation direction around the axis of the control lever (11), **characterized in that**
1.5 the connecting element is snapped onto the free end of the control lever (11),
1.6 the operating grip (12) is connected to the connecting element (35, 45) following the snapping thereof onto the free end of the control lever (11) and
1.7 a securing of the connection of the connecting element snapped onto the control lever with the latter takes place by a receptacle in the operating grip (12), which engages in areal manner on the outsides of the connecting element and consequently prevents the release of the snap connection.

2. Sanitary fitting according to claim 1, wherein the operating grip (12) is snapped onto the connecting element (35, 45).

3. Sanitary fitting according to claim 1 or 2, wherein the connecting element (15, 25, 35, 45) is fixed to the control lever (11) with the aid of a fastening element (14) acting in the longitudinal direction thereof.

4. Sanitary fitting according to claim 2 or 3, wherein the connecting element (15, 25, 35, 45) is additionally firmly screwed to the control lever (11).

5. Sanitary fitting according to one of the preceding claims, wherein the connecting element (15, 25, 35, 45) surrounds the control lever (11) in sleeve-like manner.

6. Sanitary fitting according to one of the claims 1 or 3 to 5, wherein the operating grip (12) is fixed to the connecting element (15) by a clamping screw, which preferably engages on a tongue (16, 28) of the connecting element (15).

7. Sanitary fitting according to claim 6, wherein the tongue (28) is secured between part of the control lever (11) and the clamping screw (18).

8. Sanitary fitting according to claim 6, wherein the tongue (16) is secured between part of the operating grip (12) and the clamping screw (18).

9. Sanitary fitting according to one of the claims 6 to 8, wherein the longitudinal axis of the clamping screw (18) is inclined to the longitudinal axis of the control lever (11).

10. Sanitary fitting according to one of the preceding claims, wherein the connecting element (15, 25, 35, 45) is made from metal.

11. Sanitary fitting according to one of the preceding claims, wherein the connecting element (15, 25, 35, 45) engages in depressions of the control lever (110.

12. Sanitary fitting according to one of the preceding claims, wherein the connecting element (25) extends up to the pivot pin (27) of the control lever (11) and is also fixed to the latter.

13. Sanitary fitting according to one of the claims 1 to 9 and 11/12, wherein the connecting element is made from plastic or a combination of metal and plastic.

14. Sanitary fitting according to one of the preceding claims, wherein the connecting element (61) is fixed to the grip (60) with the aid of bayonet hooks.

15. Sanitary fitting according to claim 14, wherein the bayonet hooks are located on the grip (60) and cooperate with indentations (62) on an intermediate part forming the connecting element (61).

## Revendications

1. Robinetterie sanitaire comprenant
1.1 un corps de robinet (1)
1.2 une cartouche de vanne (10) qui est disposée dans le corps de robinet (1), et
1.2.1 qui est actionnable à l'aide d'un levier de commande (11),
1.3 un élément de liaison (15, 25, 35, 45), qui
1.3.1 s'applique contre l'extrémité libre du levier de commande (11) sur au moins une partie de sa commande et
1.3.2 qui est fixé à ce dernier, comprenant également
1.4 une poignée d'actionnement (12) qui
1.4.1. attaque l'élément de liaison (15, 25, 35, 45) et
1.4.2 qui est relié mécaniquement avec ce dernier dans le sens de rotation autour de l'axe du levier de commande (11), **caractérisé en ce que**
1.5. l'élément de liaison est encliqueté sur l'extrémité libre du levier de commande (11),
1.6 la poignée d'actionnement (12) est reliée à l'élément de liaison (35, 45) après l'encliquetage de celui-ci sur l'extrémité libre du levier de commande (11)
1.7 une fixation de la liaison de l'élément de liaison encliqueté sur le levier de commande s'effectue par un logement dans la poignée d'actionnement (12) qui s'applique contre les faces externes de l'élément de liaison et qui empêche ainsi le désenclenchement de la liaison d'encliquetage.

2. Robinetterie de sanitaire selon la revendication 1, la poignée d'actionnement (12) est encliquetée sur l'élément de liaison (35, 45).

3. Robinetterie de sanitaire selon la revendication 1 ou 2, où l'élément de liaison (15, 25, 35, 45) est fixé au levier de commande (11) à l'aide d'un élément de fixation (14) agissant dans le sens longitudinal du levier.

4. Robinetterie de sanitaire selon la revendication 2 ou 3, où l'élément de liaison (15, 25, 35, 45) est fixé en supplément sur le levier de commande (11).

5. Robinetterie de sanitaire selon l'une des revendications précédentes, où l'élément de liaison (15, 25, 35, 45) entoure le levier de commande (11) à la manière d'un manchon.

6. Robinetterie de sanitaire selon l'une des revendications 1 ou 3 à 5, où la poignée d'actionnement (12) est fixée sur l'élément de liaison (15) par une vis de serrage qui s'applique de préférence contre un épaulement (16, 28) de l'élément de liaison (15)

7. Robinetterie de sanitaire selon la revendication 6, où l'épaulement (28) est fixé entre une partie du levier de commande (11) et la vis de serrage (18).

8. Robinetterie de sanitaire selon la revendication 6, où l'épaulement (16) est fixé entre une partie de la poignée d'actionnement (12) et la vis de serrage (18).

9. Robinetterie de sanitaire selon l'une des revendications 6 à 8, où l'angle longitudinal de la vis de serrage (18) s'étend de manière inclinée par rapport à l'axe longitudinal du levier de commande (11).

10. Robinetterie de sanitaire selon l'une des revendications précédentes, où l'élément de liaison (15, 25, 35, 45) se compose de métal.

11. Robinetterie de sanitaire selon l'une des revendications précédentes, où l'élément de liaison (15, 25, 35, 45) s'engagent dans des cavités du levier de réglage (11)

12. Robinetterie de sanitaire selon l'une des revendications précédentes, où l'élément de liaison (25) va jusqu'à l'axe de pivotement (27) du levier de réglage (11) et est fixé à ce dernier.

13. Robinetterie de sanitaire selon l'une des revendications 1 à 9 et 11 à 12, où l'élément de liaison est en matière plastique ou une combinaison de matière plastique et de métal.

14. Robinetterie de sanitaire selon l'une des revendications précédentes, où l'élément de liaison (61) est fixé à l'aide de crochets à baïonnette sur la poignée (60).

15. Robinetterie de sanitaire selon la revendication 14, où les crochets à baïonnette sont fixés sur la poignée (60) et coopère avec des encoches (62) sur une pièce intercalaire formant l'élément de liaison (61).
